Europäisches Patentamt

European Patent Office

Office européen des brevets

(11) Veröffentlichungsnummer: **0 195 900**
**B1**

## (12) EUROPÄISCHE PATENTSCHRIFT

(45) Veröffentlichungstag der Patentschrift: **08.08.90**

(21) Anmeldenummer: **86101385.2**

(22) Anmeldetag: **03.02.86**

(51) Int. Cl.⁵: **A 01 C 7/04**

(54) Säaggregat für Einzelkornsämaschinen.

(30) Priorität: **23.02.85 DE 8505231 u**

(43) Veröffentlichungstag der Anmeldung:
**01.10.86 Patentblatt 86/40**

(45) Bekanntmachung des Hinweises auf die
Patenterteilung:
**08.08.90 Patentblatt 90/32**

(84) Benannte Vertragsstaaten:
**AT BE DE FR GB IT NL SE**

(56) Entgegenhaltungen:
**BE-A- 897 676**
**DE-A-3 315 137**
**FR-A-1 410 390**
**US-A-3 990 606**

(73) Patentinhaber: **ACCORD Landmaschinen**
**Heinrich Weiste & Co. GmbH**
**Coesterweg 42**
**D-4770 Soest (DE)**

(72) Erfinder: **Schoenmaekers, Jan**
**Raar 8a**
**Meerssen (NL)**

(74) Vertreter: **König, Werner, Dipl.-Ing.**
**Habsburgerallee 23-25**
**D-5100 Aachen (DE)**

Courier Press, Leamington Spa, England.

EP 0 195 900 B1

**Beschreibung**

Die Erfindung betrifft ein Säaggregat für Einzelkornsämaschinen, welches ein Gehäuse mit einer an eine Unterdruckquelle anschließbaren Unterdruckkammer und einen mit einem Saatgutbehälter kommunizierenden Saatgutaufnahmeraum aufweist, wobei zwischen Unterdruckkammer und Saatgutaufnahmeraum eine mit einer Antriebswelle verbundene Lochscheibe vorgesehen ist, deren Sauglöcher auf einem Teilkreis liegen, der an einem Vereinzelungselement vorbeiführt, in einem unteren Bereich gegen den Unterdruck der Unterdruckkammer abgesperrt sind und dabei über einer Auswurföffnung des Saatgutaufnahmeraums angeordnet sind.

Bei derartigen bekannten Säaggregaten nimmt eine rotierende Lochscheibe, an der einerseits Unterdruck anliegt, aus einem Saatgutvorrat Saatkörner mit, die an den einzelnen Sauglöchern auf der anderen Seite der Lochscheibe gehalten werden. Mit Hilfe eines Vereinzelungselements wird versucht sicherzustellen, daß jedes Saugloch nur mit einem Saatkorn besetzt ist, Fehlstellen aber ausreichend zuverlässig vermieden werden. Die Sauglöcher werden dann durch einen Bereich hindurchgeführt, in dem sie nicht mehr dem Saugdruck ausgesetzt sind. Hier fallen dann die Saatkörner unter Zuhilfenahme von Abstreifern, Blasdüsen oder dgl. in die Saatfurche ab.

Derartige Säaggregate sind sowohl für relativ grobe Saatkörner wie z.B. Mais, Bohnen, Zuckerrüben und dgl. ebenso bekannt wie für Kleinsämereien, wie z.B. Möhrensamen, Zwiebelsamen und dgl.

So ist z.B. eine Einzelkornsämaschine bekannt (DE—AS 22 42 272) bei der eine rotierende Trommel vorgesehen ist, die an ihrer einen Stirnseite mit einer Lochscheibe verschlossen ist. an die Außenseite dieser Lochscheibe grenzt ein Saatgutraum.

Die Trommel lagert auf einer Achse, welche den Innenraum der Trommel an eine Unterdruckquelle anschließt. Diese bekannte Vorrichtung eignet sich insbesondere für das Aussäen relativ großer Saatkörner, die einen entsprechend großen Reihenabstand erfordern. Schwierigkeiten können sich bei dieser bekannten Maschine dann ergeben, wenn feine Sämereien in geringen Reihenabstäffen auszusäen sind.

Es ist ferner bereits eine Einzelkornsämaschine bekannt (DE—GM 75 30 329), die insbesondere für das Säen von Samen kleinen Durchmessers bestimmt ist. Bei dieser bekannten Sämaschine wird die Lochscheibe durch axiale Klemmung auf der Antriebswelle festgelegt. Eine solche Festlegung führt zwangsläufig zu einer relativ großen axialen Erstreckung der Lochscheibe und läßt Schwierigkeiten bei der Abdichtung an ihrem Außenrand befürchten. Die Lochscheibe liegt zwischen einer Unterdruckkammer einerseits und einem Saatgutaufnahmeraum andererseits. Es hat sich bei dieser bekannten Einzelkornsämaschine gezeigt, daß Lagerung und Abdichtung der Lochscheibe nachteilig sind. Zudem erweist sich der Austausch der Lochscheibe als recht zeitaufwendig. Schließlich erfordert auch diese bekannte Sämaschine eine beträchtliche Baubreite. Daraus ergibt sich eine Einschränkung bei der z.T. wünschenswerten Reduzierung des Reihenabstandes.

Die Aufgabe der vorliegenden Neuerung wird nun darin gesehen, ein Säaggregat für eine Einzelkornsämaschine zu schaffen, das sowohl für Feinsämereien, also Saatkörner mit sehr geringem Durchmesser, wie durch für Saatkörner mit größerem Durchmesser verwendbar ist, eine stabile Abdichtung ergibt, einen einfachen Aufbau bei geringer Breite hat und zudem ein einfaches Austauschen der Lochscheibe ermöglicht.

Diese Aufgabe wird neuerungsgemäß bei einem Säaggregat der eingangs erwähnten Art dadurch gelöst, daß die Lochscheibe auf einem mit der Antriebswelle fest verbundenen, im Gehäuse der Unterdruckkammer gelagerten Lagerteller lösbar befestigt ist, dessen Außenrand einen geringen radialen Abstand zu einer am Rande der Unterdruckkammer befindlichen Dichtung hat, auf der sich der radial außen liegende Rand der Lochscheibe abstützt, und daß der Saatgutaufnahmeraum von einem topfartigen Deckelteil gebildet ist, das sich an dem Rand der Unterdruckkammer abstützt und mit dem Saatgutbehälter kommuniziert.

Dabei kann die Lochscheibe als Abschluß einer Unterdruckkammer gesehen werden, die von dem Gehäuse gebildet ist und eine einfache Zylinderform hat. Der Lagerteller trägt die Lochscheibe und gibt ihr einen festen Halt. Der Durchmesser des Lagertellers kann so gewählt werden, daß zwischen seinem radial außen liegenden Rand und dem Rand der Unterdruckkammer nur ein schmaler Ringraum verbleibt. Der radial außen liegende Rand der Lochscheibe ist am Rande der Unterdruckkammer dichtend abgestützt. Da aber der Abstand zwischen dem Außenrand des Lagertellers und der Dichtung klein bemessen sein kann, liegt die Lagerscheibe ausreichend stabil an der Dichtung an, selbst dann, wenn sie aus einem dünnwandigen Material hergestellt ist. Der Deckelteil kann in einfacher Weise mit dem Gehäuse der Unterdruckkammer verbunden sein. Die Abdichtung zwischen diesen beiden Bauteilen braucht nicht luftdicht zu sein, sondern muß lediglich sicherstellen, daß Saatkörner nicht aus dem Saatgutraum herausfallen. Die einfache Verbindung der Bauteile ergibt, daß auch die Lochscheibe schnell entnommen und durch eine andere ersetzt werden kann.

Der einfache Aufbau des Deckelteils macht es zudem möglich, ein Deckelteil geringerer Tiefe gegen ein anderes größerer Tiefe auszutauschen (und umgekehrt), um damit das Aufnahmevolumen des Deckelteils zu verändern. So kann also für die Aussaat feiner Sämereien ein Deckelteil geringen Volumens und für die Aussaat größerer Saatkörper ein Deckelteil mit einem größeren Volumen eingebaut werden.

Das neuerungsgemäße Säaggregat kann ferner so ausgebildet sein, daß die Lochscheibe mit dem Lagerteller in der Art eines Bajonettverschlusses verbunden ist. Zum Lösen bzw. Befestigen der Lochscheibe auf dem Lagerteller ist es also lediglich erforderlich, ohne weitere Hilfsmittel die Lochscheibe in der einen oder der anderen Umfangsrichtung gegenüber dem Lagerteller zu verdrehen.

Das neuerungsgemäß Säaggregat kann ferner so ausgebildet sein, daß auf dem Lagerteller mehrere in Richtung auf den Saatgutaufnahmeraum vorstehende, auf einem zentrisch zur Achse der Antriebswelle verlaufenden Kreis angeordnet Befestigungsbolzen vorgesehen sind, die einen im wesentlichen der Wandstärke der Lochscheibe entsprechenden Aufnahmeschlitz haben und in Öffnungen der Lochscheibe eingreifen, deren Breite in Drehrichtung der Lochscheibe abnimmt.

Somit können also die zur lösbaren Befestigung der Lochscheibe auf dem Lagerteller vorgesehenen Befestigungsbolzen zusätzlich eine Rühreffekt ausüben.

Das neuerungsgemäße Säaggregat kann ferner so ausgebildet sein, daß auf der Lochscheibe mehrere in Richtung auf den Saatgutaufnahmeraum vorstehende, auf einem zentrisch zur Achse der Antriebswelle verlaufenden Kreis angeordnet Rührerbolzen angeordnet sind. Es ist also möglich, zusätzliche Bolzen anzubringen.

Das neuerungsgemäße Säaggregat kann ferner so ausgebildet sein, daß die Befestigungsbolzen und die Rührerbolzen auf einem gemeinsamen Teilkreis liegen. Auf diese Weise ergibt sich also auf einem gemeinsaamen Teilkreis eine Reihe von in den Saatgutaufnahmeraum hinein vorstehenden vorstehenden Elementen.

Das neuerungsgemäße Säaggregat kann ferner so ausgebildet sein, daß in das Deckelteil eine Trennwand eingesetzt ist, die einen oberen mit dem Saatgutbehälter kommunizierenden Saatgutraum nach unten hin abschließt. Somit kann ein relativ kleiner Saatgutraum geschaffen werden, der insbesondere für die Verwendung feinkörnigen Saatguts zweckmäßig ist. Dieser Saatgutraum kann an seiner tiefsten Stelle mit einem Verschluß versehen sein, um das Saatgut erforderlichenfalls vollkommen entleeren zu können.

Das neuerungsgemäße Säaggregat kann ferner so ausgebildet sein, daß in der Trennwand ein stabförmiger Rührer elastisch gelagert ist, dessen eines Ende mit den in den Saatgutaufnahmeraum hineinragenden Befestigungs- und Rührerbolzen zusammenarbeitet, während dessen anderes Ende in den Bereich der Einlauföffnung zwischen Saatgutbehälter und oberem Saatgutraum hineinreicht. Die auf der Lochscheibe sitzenden Bolzen greifen somit an dem einen Ende des Rührers an und bewirken, daß dessen anderes Ende oberhalb der Trennwand im Bereich der Einlauföffnung in den Saatgutraum bewegt wird und dort Brückenbildungen und Versetzungen jeglicher Art verhindert.

Das neuerungsgemäße Säaggregat kann ferner so ausgebildet sein, daß die Befestigungs- und Rührerbolzen unterschiedlich weit in den Saatgutaufnahmeraum hineinreichende, mit dem Rührer zusammenarbeitende Wirkflächen haben. Dadurch kann erreicht werden, daß das im Saatgutraum befindliche Ende des Rührers sich nicht nur in einer Ebene verlagert, sondern auch quer dazu. Der Rühreffekt wird dadurch weiter verbessert.

Das neuerungsgemäße Säaggregat kann ferner so ausgebildet sein, daß die am Rande der Unterdruckkammer befindliche Dichtung als Filzring ausgebildet ist.

Das neuerungsgemäße Säaggregat kann so ausgebildet sein, daß die Lochscheibe eine in Richtung auf die am Rande der Unterdruckkammer befindliche Dichtung wirkende Vorspannung hat. Dadurch ergibt sich eine besonders zuverlässige Abdichtung der Unterdruckkammer an ihrem radial außen liegenden Rand.

Das neuerungsgemäße Säaggregat kann ferner so ausgebildet sein, daß das Gehäuse der Unterdruckkammer und das Deckelteil Tiefziehteile sind. Dadurch werden die Herstellungskosten wesentlich reduziert und das Gewicht erheblich gesenkt.

Das neuerungsgemäße Säaggregat kann ferner so ausgebildet sein, daß das Deckelteil mit dem Gehäuse der Unterdruckkammer über Klammern lösbar verbunden ist. Die Klammern könne dabei im wesentlichen U-förmig ausgebildet sein und von radial außen her das Gehäuse der Unterdruckkammer und das Deckelteil übergreifen. Die Klammern können z.B. an einem Hebel sitzen, der am Gehäuse oder aber am Deckelteil schwenkbar gelagert ist. Das Lösen und Schließen und damit das Austauschen der Lochscheibe werden damit weiter vereinfacht.

Im folgenden Teil der Beschreibung wird eine Ausführungsform des neuerungsgemäßen Säaggregats anhand von Zeichnungen beschrieben. Es zeigt:

Fig. 1 eine Seitenansicht auf das Deckelteil des neuerungsgemäßen Säaggregats,

Fig. 2 eine Seitenansicht auf das Gehäuse der Unterdruckkammer des neuerungsgemäßen Aggregats,

Fig. 3 einen Schnitt nach der Linie 3—3 in Fig. 2,

Fig. 4 eine Seitenansicht auf das Gehäuse der Unterdruckkammer mit aufliegender Lochscheibe und abgenommenem Deckelteil und

Fig. 5 eine Ansicht der Innenseite des Deckelteils.

Das neuerungsgemäße Säaggregat hat ein eine Unterdruckkammer 1 bildendes topfartiges Gehäuse 2 mit einer Nabe 3, in der ein drehfest auf einer Antriebswelle 4 sitzendes Nabenteil 5 lagert. Das Gehäuse 2 ist über einen Halter 6 in üblicher, nicht dargestellter Weise mit dem Rahmen einer Einzelkornsämaschine verbindbar. Die Antriebswelle 4 wird über nicht dargestellte Antriebselement in Drehung versetzt.

Auf dem Nabenteil 5 sitzt ein Lagerteller 7, der sich bei Drehung der Antriebswelle 4 mit dieser dreht. Mit dem Lagerteller 7 wiederum ist eine Lochscheibe 8 verbunden, in der auf einem Teilkreis in einem bestimmten Abstand Sauglöcher 9 angeordnet sind. Der Durchmesser dieser Sauglöcher 9 ist kleiner als der Durchmesser das auszusäenden Saatkörner. An seinem radial außen liegenden Rand kommt die Lochscheibe 8 auf einem Dichtung 10 aus Filz zur Anlage, der mit Graphit versetzt ist. Der Außendurchmesser der Lochscheibe 9 ist kleiner als der Innendurchmesser der zylindrischen Außenwand 11 des Gehäuses 2.

Die Lochscheibe 8 stellt sich in unbelastetem Zustand leicht kegelstumpfförmig ist, wodurch sich im montierten Zustand eine Spannung der Lochscheibe 8 an ihrem äußeren Rand in Richtung auf den Dichtring 10 ergibt.

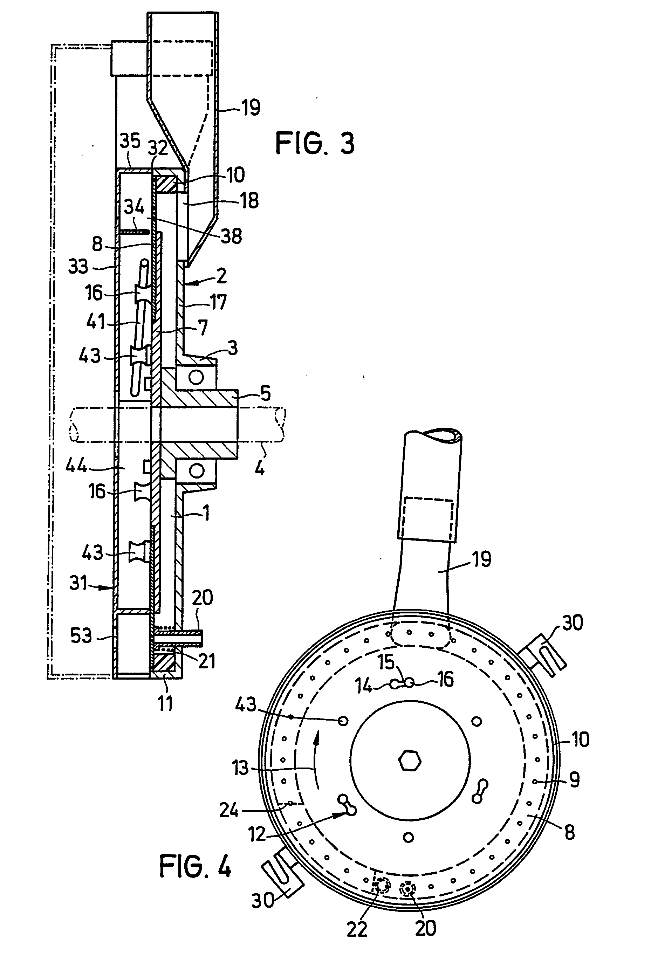

Die Lochscheibe 8 ist mit Langlöchern 12 versehen (Fig. 4). Die Drehrichtung der Lochscheibe 8 ist dabei durch den Pfeil 13 angegeben. Die Langlöcher 12 haben an ihrem in Drehrichtung hinten liegenden Ende einen Abschnitt 14 großen Durchmessers, an den sich ein Langlochabschnitt 15 geringerer Breite anschließt.

Auf dem Lagerteller 7 sitzen achsparallel zueinander angeordnete Befestigungsbolzen 16. Diese Befestigungsbolzen 16 sind hinsichtlich Durchmesser und Positionierung so gewählt, daß sie durch die Abschnitte 14 der Langlöcher 12 der Lochscheibe 8 hindurchtreten können. Die Befestigungsbolzen 16 haben unmittelbar über dem Lagerteller 7 je einen Aufnahmeschlitz, welcher im wesentlichen der Wandstärke der Lochscheibe 8 entspricht. Zur Befestigung der Lochscheibe 8 auf dem Lagerteller 7 ist es also lediglich erforderlich, die Lochscheibe 8 so auf den Lagerteller 7 aufzusetzen, daß die Befestigungsbolzen 16 durch die Abschnitte 14 der Langlöcher 12 hindurchtreten. Anschließend ist dann die Lochscheibe 8 entgegen dem Uhrzeigersinn des Aggregats relativ zum Lagerteller 7 zu verdrehen (Fig. 4).

Das Gehäuse 2 der Unterdruckkammer 1 hat eine Rückwand 17. In dieser Rückwand 17 ist eine großdimensionierte Öffnung 18 für einen Saugluftanschluß 19 vorgesehen. Die Bemessung des Saugluftanschlusses 19 ermöglicht es, mit einem niedrigen. Vakuum zu arbeiten und damit das Saatgut schonend zu behandeln.

In der Rückwand 17 ist ein Verbindungsrohr 20 vorgesehen, das mittels einer Feder 21 gegen die Lochscheibe 8 gedrückt wird. Der freie Querschnitt des Verbindungsrohres 20 ist dabei so plaziert, daß die einzelnen Sauglöcher 9 der Lochscheibe 8 diesen Querschnitt passieren müssen. An seinem aus der Rückwand 17 nach außen vorstehenden Ende ist das Verbindungsrohr 20 an Umgebungsdruck angeschlossen. Dies bedeutet, daß bei dem Saugloch 9, welches vor dem Verbindungsrohr 20 liegt, der in der Unterdruckkammer 1 herrschende Saugdruck unterbrochen und stattdessen Atmosphärendruck angelegt wird. Die auf das hier gehaltene Saatkorn ausgeübte Haltekraft wird damit unterbrochen. Das Korn wird zum Abfallen freigegeben.

Neben dem Verbindungsrohr 20 sitzt ein Druckluftanschluß 22, der an eine Druckluftleitung 23 angeschlossen ist und nach dem Abfallen der Saatkörner zu einem reinigenden Ausblasen der Sauglöcher 9 der Lochscheibe 8 bestimmt ist (Fig. 2).

Zwischen dem radial außen liegenden Rand des Lagertellers 7 und dem Dichtring 10 deckt die Lochscheibe 8 einen ringförmigen Bereich ab. In diesem ringförmigen Bereich liegen im unteren Abschnitt des Aggregats (Fig. 4) das Verbindungsrohr 20 und der Druckluftanschluß 22. In Drehrichtung der Lochscheibe (Pfeil 13) ist im Anschluß an den Druckluftanschluß 22 die der Unterdruckkammer 1 zugewandte Seite der Lochscheibe 8 in diesem Ringbereich durch eine Einlage 24 abgeschlossen.

Mit dem Gehäuse 2 der Unterdruckkammer 1 ist über U-förmige Klammern 30 ein Deckelteil 31 lösbar verbunden. Dieses Deckelteil 31, durch das die Antriebswelle 4 hindurchreichen kann, ist ebenfalls topfartig ausgebildet. Sein außen liegender Rand 32 kommt dabei auf der Außenwand 11 des Gehäuses 2 zur Anlage. Diese Teile 11 und 32 müssen so eng aufeinandergebracht werden, daß Saatkörner zwischen ihnen nicht hindurchtreten können. Eine luftdichte Verbindung ist hier nicht erforderlich.

Das Deckelteil 31 hat eine Basis 33. Von dieser Basis 33 geht eine Trennwand 34 aus, die bis in die Ebene des Randes 32 hinein vorsteht, also in zusammengebautem Zustand unmittelbar vor der Lochscheibe 8 endet. In dem zylindrischen Wandabschnitt 35 mit dem Rand 32 ist eine Einlaßöffnung 36 für das Saatgut vorgesehen, welches aus einem Saatgutbehälter 37 durch die Einlaßöffnung 36 hindurch in einen oberhalb der Trennwand 34 gebildeten Saatgutraum 38 eintritt.

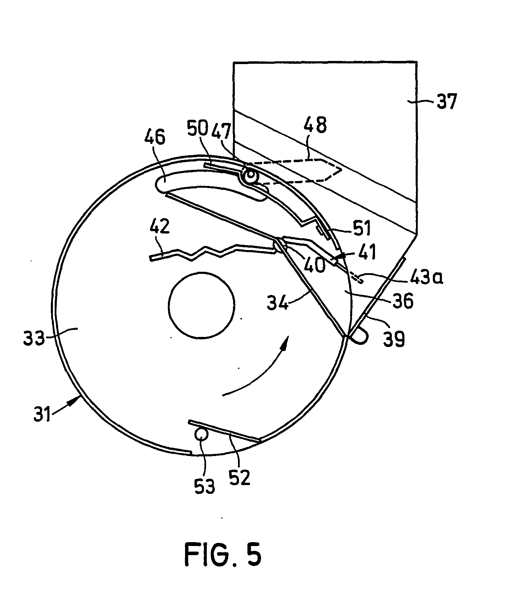

Die Trennwand 34 beginnt, wie Fig. 5 zeigt, am unteren Ende der Einlaßöffnung 36 und steigt ausgehend von hier nach oben hin an. An diesem Beginn der Trennwand 34 endet der Saatgutbehälter 37. Er ist hier mit einer Klappe 39 verschlossen, die ein völliges Entleeren des Säaggregats von noch darin befindlichen Saatkörnern ermöglicht.

In die Trennwand 34 ist ein gummiartiges Materialstück 40 eingesetzt, das einen stabförmigen elastischen Rührer 41 trägt. Ein Ende 42 des Rührers 41 liegt dabei unterhalb der Trennwand 34, während das andere Ende 43 oberhalb der Trennwand 34 im Bereich der Einlaßöffnung 36 angeordnet ist. Das Materialstück 40 ermöglicht ein allseitiges Verschwenken des Rührers 41.

Bei aufgesetztem Deckelteil 31 kommt das Ende 42 des Rührers 41 in dem Bewegungsbereich der Befestigungsbolzen 16 und von auf der Lochscheibe 18 angebrachten Rührerbolzen 43 zu liegen. Diese Bolzen 16, 43 haben (Fig. 3) eine gewölbte Wirfläche 42. Zwischen zwei Befestigungsbolzen 16 sitzen Rührerbolzen 43. Die Wirkflächen 42 der Befestigungsbolzen 16 und der Rührerbolzen 43 sind unterschiedlich weit in den vom Deckelteil 31 begrenzten Saatgutaufnahmeraum 44 hinein versetzt. Das Zusammenwirken des Rührers 41 mit den Bolzen 16, 43 bewirkt damit sowohl ein Verschwenken des Rührers 41 in der Zeichenebene gemäß Fig. 5 als auch ein Bewegung der Enden des Rührers 41 senkrecht dazu.

Die Klammern 30 sind (Fig. 2) um Schwenkzapfen 45 herum schwenkbar an dem Gehäuse 2 festgelegt.

In der Basis 33 des Deckelteils 31 ist ein Sichtfenster 46 vorgesehen, durch das die Besetzung der einzelnen Sauglöcher 9 der Lochscheibe 8 kontrolliert werden kann.

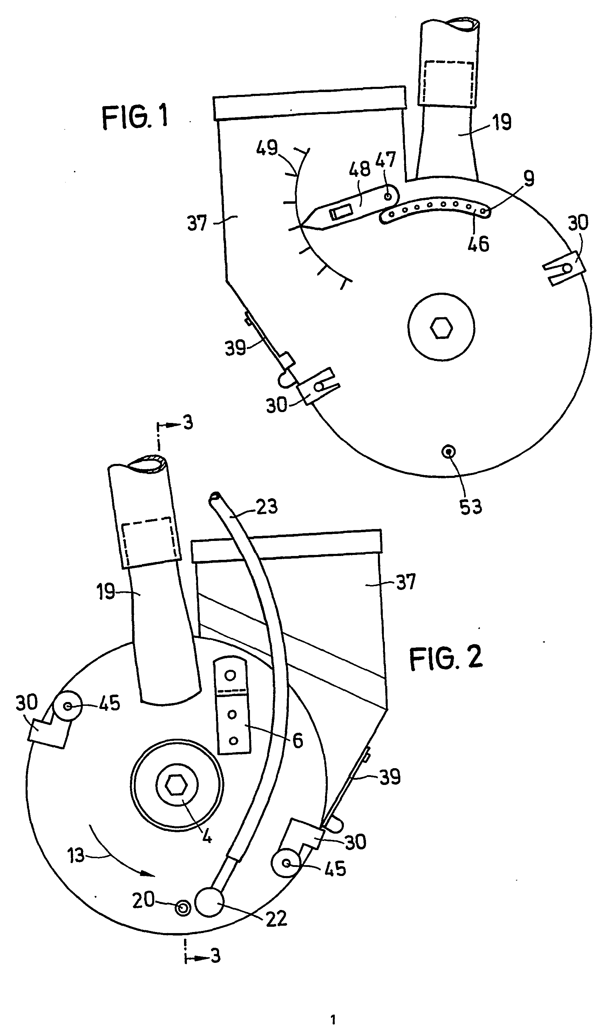

In der Basis 33 ist ferner ein Exzenter 47 gelagert, auf dessen äußerem Ende (Fig. 1) ein Stellglied 48 sitzt, das mit einer Skala 49 zusammenarbeitet. An dem Exzenter 47 liegt innerhalb des Deckelteils 31 (Fig. 5) ein elastisches Metallband 50 an, das bei 51 mit dem zylindrischen Randabschnitt 35 des Deckelteils 31 fest verbunden ist. Dieses Metallband ist als Vereinzelungselement ausgebildet. Sein Abstand zu dem Teilkreis, auf dem die Sauglöcher 9 der Lochscheibe 8 liegen, kann durch entsprechende Einstellung des Stellgliedes 48 verändert werden.

Der zylindrische Wandabschnitt 35 des Deckelteils 31 ist in seinem unteren Bereich (Fig. 5) aufgeschnitten und bildet einen Abstreifer 52. Somit wird freier Raum zum Abfallen der von den Sauglöchern 9 der Lochscheibe 8 gelösten Saatkörner gegeben.

Eine Öffnung 53 in der Basis 33 läßt die aus dem Druckluftanschluß 22 austretende Luft passieren.

Das Gehäuse 2 der Unterdruckkammer 1 sowie das Deckelteil 31 sind nach dem Ausführungsbeispiel als Tiefziehteile aus Blech hergestellt.

**Patentansprüche**

1. Säaggregat für Einzelkornsämaschinen, welches ein Gehäuse (2) mit einer an eine Unterdruckquelle anschließbaren Unterdruckkammer (1) und einen mit einem Saatgutbehälter (37) kommunizierenden Saatgutaufnahmeraum (44) aufweist, wobei zwischen Unterdruckkammer (1) und Saatgutaufnahmeraum (44) eine mit einer Antriebswelle (4) verbundene Lochscheibe (8) vorgesehen ist, deren Sauglöcher (9) auf einem kreis liegen, der an einem Vereinzelungselement (51) vorbeiführt, in einem unteren Bereich gegen den Unterdruck der Uterdruckkammer (1) abgesperrt sind und dabei über einer Auswurföffnung des Saatgutaufnahmeraums (44) angeordnet sind, dadurch gekennzeichnet, daß die Lochscheibe (8) auf einem mit der Antriebswelle (4) fest verbundenen, im Gehäuse (2) der Unterdruckkammer (1) gelagerten Lagerteller (7) lösbar befestigt ist, dessen Außenrand einen geringen radialen Abstand zu einer am Rande der Unterdruckkammer (1) befindlichen Dichtung (10) hat, auf der sich der radial außen liegende Rand der Lochscheibe (8) abstützt, und daß der Saatgutaufnahmeraum (44) von einem topfartigen Deckelteil (31) gebildet ist, das sich an dem Rand der Unterdruckkammer (1) abstützt und mit dem Saatgutbehälter (37) kommuniziert.

2. Säaggregat nach Anspruch 1, dadurch gekennzeichnet, daß die Lochscheibe (8) mit dem Lagerteller (7) in der Art eines Bajonettverschlusses verbunden ist.

3. Säaggregat nach Anspruch 2, dadurch gekennzeichnet, daß auf dem Lagerteller (7) mehrere in Richtung auf den Saatgutaufnahmeraum (44) vorstehende, auf einem zentrisch zur Achse der Antriebswelle (4) verlaufenden Kreis angeordnete Befestigungsbolzen (16) vorgesehen sind, die einen im wesentlichen der Wandstärke der Lochscheibe (8) entsprechenden Aufnahmeschlitz haben und in Öffnungen (12) der Lochscheibe (8) eingreifen, deren Breite in Drehrichtung der Lochscheibe (8) eingreifen, deren Breite in Drehrichtung der Lochscheibe (8) abnimmt.

4. Säaggregat nach einem der vorhergehenden Ansprüche, dadurch gekennzeichnet, daß auf der Lochscheibe (8) mehrere in Richtung auf den Saatgutaufnahmeraum (44) vorstehende, auf einem zentrisch zur Achse der Antriebswelle (4) verlaufenden Kreis angeordnete Rührerbolzen (43) angeordnet sind.

5. Säaggregat nach Anspruch 3 oder 4, dadurch gekennzeichnet, daß die Befestigungsbolzen (16) und die Rührerbolzen (43) auf einem gemeinsamen kreis liegen.

6. Säaggregat nach einem der vorhergehenden Ansprüche, daß in das Deckelteil (31) eine Trennwand (34) eingesetzt ist, die einen oberen mit dem Saatgutbehälter (37) kommunizierenden Saatgutraum (38) nach unten hin abschließt.

7. Säaggregat nach Anspruch 6, dadurch gekennzeichnet, daß in der Trennwand (34) ein stabförmiger Rührer (41) elastisch gelagert ist, dessen eines Ende mit den in den Saatgutaufnahmeraum (44) hineinragenden Befestigungs- (16) und Rührerbolzen (43) zusammenarbeitet, während dessen anderes Ende in den Bereich der Einlauföffnung (36) zwischen Saatgutbehälter (37) und oberem Saatgutraum (38) hinenreicht.

8. Säaggregat nach Anspruch 7, dadurch gekennzeichnet, daß die Befestigungs- (16) und Rührerbolzen (43) unterschiedlich weit in den Saatgutaufnahmeraum (44) hineinreichende, mit dem Rührer (41) zusammenarbeitende Wirkflächen (42) haben.

9. Säaggregat nach einem der vorhergehenden Ansprüche, dadurch gekennzeichnet, daß die am Rande der Unterdruckkammer (1) befindliche Dichtung (10) als Filzring ausgebildet ist.

10. Säaggregat nach einem der vorhergehenden Ansprüche, dadurch gekennzeichnet, daß die Lochscheibe (8) eine in Richtung auf die am Rande der Unterdruckkammer (1) befindliche Dichtung (10) wirkende Vorspannung hat.

11. Säaggregat nach einem der vorhergehenden Ansprüche, dadurch gekennzeichnet, daß das Gehäuse (2) der Unterdruckkammer (1) und das Deckelteil (31) Tiefziehteile sind.

12. Säaggregat nach einem der vorhergehenden Ansprüche, dadurch gekennzeichnet, daß das Deckelteil (31) mit dem Gehäuse (2) der Unterdruckkammer (1) über Klammern (30) lösbar verbunden ist.

**Revendications**

1. Unité de semis pour semoirs monograines présentant un boîtier (2) avec une chambre de dépression (1) reliable à une source de dépression et un réceptacle à semences (44) communiquant avec un réservoir à semences (37), un disque à trous (8) relié à un arbre moteur (4) étant prévu entre la chambre de dépression (1) et le réceptacle à semences (44); les narines du disque (9) sont placées sur un cercle qui passe devant un élément de démariage (51) et sont protégées, à un niveau inférieur, de la dépression induite dans la chambre de dépression (1) et disposées audessus d'un trou de sortie du réceptacle à semences (44), caractérisée par le fait que le disque à trous (8) est fixé, de manière amovible à un palier (7) relié fermement à l'arbre moteur (4) et placé dans le boîtier (2) de la chambre de dépression (1), le bord extérieur de la plaque étant situé à une courte distance radiale d'un joint (10) placé au bord de la chambre de dépression (1); sur ce joint s'appuie le bord du disque à trous (8), situé radialement à l'extérieur, et le réceptacle à semences (44) est constitué d'un couvercle en forme de pot (31) s'appuyant sur le bord de la chambre de dépression (1) et communiquant avec le réservoir à semences (37).

2. Unité de semis correspondant à la revendication 1, caractérisée par le fait que le disque à trous (8) est relié au palier (7) à la façon d'un embodîtement à baïonnette.

3. Unité de semis correspondant à la revendication 2, caractérisée par le fait qu'il est prévu sur le palier (7) plusieurs boulons de serrage (16) placés en direction du réceptacle à semences (44) et disposés sur un cercle centré sur l'axe de l'arbre moteur (4); ces boulons de serrage (16) présentent une rainure réceptrice correspondant essentiellement à l'épaisseur du disque à trous (8) et pénètrent dans certains des orifices (12) du disque à trous (8), orifices (12) dont la largeur diminue dans la direction de la rotation du disque à trous (8).

4. Unité de semis correspondant à une des revendications précédentes, caractérisée par le fait que sur le disque à trous (8), il est disposé plusieurs boulons d'agitateur (43), placés en direction du réceptacle à semences (44) et sur un cercle dont la rotation est centrée sur l'axe de l'arbre moteur (4).

5. Unité de semis correspondant aux revendications 3 ou 4, caractérisée par le fait que les boulons de serrage (16) et les boulons d'agitateur (43) sont placés sur un cercle commun.

6. Unité de semis correspondant à une des revendications précédentes, caractérisée par le fait que dans le couvercle (31), il est installé une paroi séparatrice (34) qui ferme vers le bas une chambre à semences (38) supérieure communiquant avec le réservoir à semences (37).

7. Unité de semis correspondant à la revendication 6, caractérisée par le fait qu'un agitateur (41) en forme de batteur est fixé de façon élastique dans la paroi séparatrice (34); une des extrémités de l'agitateur travaille en symbiose avec les boulons de serrage (16) et les boulons d'agitateur (43) pénétrant dans le réceptacle à semences (44), tandis que l'autre extrémité pénètre jusqu'à proximité de l'orifice d'alimentation (36) entre le réservoir à semences (37) et la chambre supérieure à semences (38).

8. Unité de semis correspondant à la revendication 7, caractérisée par le fait que les surfaces actives (42) des boulons de serrage (16) et des boulons d'agitateur (43) pénétrent à des profondeurs différentes dans le réceptacle à semences (44) et travaillent en symbiose avec l'agitateur (41).

9. Unité de semis correspondant à une des revendications précédentes, caractérisée par le fait que le joint se trouvant au bord de la chambre de dépression (1) est constitué par un anneau de feutre (10).

10. Unité de semis correspondant à une des revendications précédentes, caractérisée par le fait que le disque à trous (8) présente une précontrainte agissant en direction d'un joint (10) situé au bord de la chambre de dépression (1).

11. Unité de semis correspondant à une des revendications précédentes, caractérisée par le fait que le boîtier (2) de la chambre de dépression (1) et que le couvercle (31) sont des pièces d'emboutissage profond.

12. Unité de semis correspondant à une des revendications précédentes, caractérisée par le fait que le couvercle (31) est relié de manière amovible au boîtier (2) de la chambre de dépression (1) par des brides de fixation (30).

**Claims**

1. Seed unit for single grain drills which possesses a housing (2) with an underpressure chamber (1) which can be connected to an underpressure source and a seed receiving chamber (44) communicating with a seed container (37), whereby a perforated disk (8) connected with a driving shaft (4) is provided between the underpressure chamber (1) and the seed receiving chamber (4) with suction holes (9) which lie on a circle passing by an isolating element (5), shut off against the underpressure from the underpressure chamber (1) in a lower section, where they are arranged over an ejector opening of the seed receiving chamber (44), characterized in that the perforated disk (8) is detachably secured on a bearing plate (7) firmly connected with the driving shaft (4) and mounted in the housing (2) of the underpressure chamber (1), the outer edge of which is at a small radial distance from a seal (10) located at the edge of the underpressure chamber (1), on which the radially outer edge of the perforated disk (8) rests and in that the seed receiving chamber (44) is formed by a pot-type lid part (31), which rests on the edge of the underpressure chamber (1) and communicates with the seed container (37).

2. Seed unit in accordance with Claim 1, characterized in that the perforated disk (8) is connected with the bearing plate (7) in the manner of a bayonet catch.

3. Seed unit in accordance with Claim 2, characterised in that a number of fastening bolts (16) projecting in the direction of the seed receiving chamber (44) arranged on a circle running centrically to the axis of the driving shaft (4) are provided on the bearing plate (7), which have a receiving slot essentially corresponding to the wall thickness of the perforated disk (8) and which engage in openings (12) of the perforated disk (8), of which the width decreases in the direction of rotation of the perforated disk (8).

4. Seed unit in accordance with one of the preceding Claims, characterised in that a number of agitator bolts (43) projecting in the direction of the seed receiving chamber (44) are arranged on the perforated disk (8) on a circle running centrically to the axis of the driving shaft (4).

5. Seed unit in accordance with Claim 3 or 4, characterised in that the fastening bolts (16) and the agitator bolts (43) lie on a common circle.

6. Seed unit in accordance with one of the preceding Claims, characterized in that a partition wall (34) is fitted in the lid part (31) which closes off at the bottom side an upper seed chamber (38) communicating with the seed container (37).

7. Seed unit in accordance with Claim 6, characterized in that a rod-shaped agitator (41) is mounted elastically in the partition wall (34), one end of which acts together with the fastening (16) and agitator bolts (43) projecting into the seed receiving chamber (44), while the other end projects into the area of the inlet aperture (36) between the seed container (37) and the upper seed chamber (38).

8. Seed unit in accordance with Claim 7, characterised in that the fastening bolts (16) and the agitator bolts (43) possess effective surfaces (42) acting in conjunction with the agitator (41) which project to differing extents into the seed receiving chamber (44).

9. Seed unit in accordance with one of the preceding Claims, characterised in that the seal (10) located at the edge of the underpressure chamber (1) is designed as a felt ring.

10. Seed unit in accordance with one of the preceding Claims, characterised in that the perforated disk (8) is provided with a pre-tension force acting in the direction of the seal (10) located at the edge of the underpressure chamber (1).

11. Seed unit in accordance with one of the preceding Claims, characterised in that the housing (2) of the underpressure chamber (1) and the lid part are deep-drawn parts.

12. Seed unit in accordance with one of the preceding Claims, characterised in that the lid part (31) is connected detachably via clamps (30) with the housing (2) of the underpressure chamber (1).

FIG. 1

FIG. 2

FIG. 3

FIG. 4

FIG. 5